# EUROPEAN PATENT APPLICATION

(11) **EP 3 920 069 A1**
(43) Date of publication of application: **08.12.2021**
(21) Application number: 20177791.9
(22) Date of filing: 02.06.2020
(51) Int. Cl.: G06F 21/64, H04L 29/06, H04L 9/32

(54) **A COMPUTER-IMPLEMENTED METHOD OF PROVIDING AT LEAST ONE ELECTRONIC SIGNATURE FOR A PLURALITY OF ELECTRONIC DOCUMENTS AND DATA PROCESSING DEVICE OR SYSTEM FOR THE SAME**

(71) Applicant: Penneo A/S, 1674 Copenhagen V (DK)
(72) Inventor: FLORA, Jan, 3300 Frederiksværk (DK)
(74) Representative: Guardian IP Consulting I/S

(57) **Abstract**

This invention relates to a computer-implemented method of (and a system for) providing one or more electronic signatures for a plurality of electronic documents (101), the method comprising the steps of: obtaining or deriving a representative or unique value (105), e.g. a hash value, for each of the plurality of electronic documents (101) determined or indicated to having to be electronically signed by a signatory user, deriving a combined representative or unique value (110), e.g. a combined hash value, on the basis of representative or unique values obtained or derived for the plurality of electronic documents (101), transmitting or providing access to the plurality of electronic documents (101) to or for a client device (300) being accessible to the signatory user, displaying, by the client device (300), the plurality of electronic documents (101) or a representation thereof to the signatory user, and electronically signing the combined representative or unique value (110) by an electronic signature of the signatory user, resulting in an electronically signed combined representative or unique value (115), in response to electronically registering that the signatory user has accepted to sign each of the plurality of electronic documents (101) determined or indicated to having to be electronically signed.

## Description

### Field of the invention

The present invention generally relates to a computer-implemented method of providing at least one electronic signature for a plurality of electronic documents and related aspects. Additionally, the present invention generally relates to an electronic data processing device or system implementing aspects and embodiments of the computer-implemented method(s).

### Background

The use of computer-implemented methods and systems applying and using electronic signatures, also often referred to as digital signatures, for various purposes are becoming more and more wide-spread. Typical advantages include one or more of the following: increased security, efficient handling and processing of electronic documents, transparency, unique identification (or at least a very strong presumption thereof) of a person the electronic signature is for, and so on. Various legal entities and authorities readily accept electronic signatures as a fully equal alternative to a person physically signing a physical document. An EU list of trusted services for handling and/or providing electronic signatures can e.g. be seen here webgate.ec.europa.eu/tl-browser/#/ for various EU countries. Some countries only have one provider while other countries have several. Some providers are official government or government affiliated providers while others are private company providers (e.g. from one or more banks, telecommunications companies, insurance companies, etc.).

Related to electronic signatures, are also electronic identification (also referred to as elD or E-id) that are digital solutions (e.g. involving a physical identify smart-card) for proof of identity of citizens or organizations.

The application of electronic signatures is not used exclusively for ease of use, efficiency purposes, and the like. More and more often, electronic signatures are also used e.g. for legal purposes or requirements, e.g. for anti-fraud or anti-money laundering (AML) purposes, unique identification of a person, etc.

There exists many ways of applying electronic signature. A commonly used way, simply put, calculates a hash value or similar from an electronic document to be signed and encrypts the hash value with a private key of the signing person or party where the encrypted hash value basically constitutes the signature of the electronic document. The signature can then subsequently be validated by decrypting the encrypted hash value using a public key of the signing person or party (the public key being related to the private key used for the signing). The decrypted hash value can then be compared to a newly generated hash value for the same electronic document that was signed and in case the newly generated hash value matches the decrypted hash value the signature of the specific document in question is deemed to be authentic.

Additional data may be used in connection with electronic signing e.g. to increase security, ensure authenticity, etc. such as valid digital certificates, time stamping, etc.

Securely managing and applying encryption, decryption, or similar are typically computationally complex and, in the present context of electronic signing and related security, typically involves the use of one or more so-called Hardware Security Modules (HSMs) or something similar to provide a controlled, tamperproof, and secure environment to safeguard and manage digital keys for strong encryption or authentication, crypto-processing, etc. Additionally, such equipment should preferably be computationally efficient with respect to processing speed for carrying out the associated processing tasks, but power consumption/usage, heat dissipation, etc. are also parameters to consider where computational efficiency translates to power consumption, i.e. an increase of computational efficiency will typically translate into a saving with respect to power consumption/usage. Furthermore, such highly specialised equipment is fairly expensive to acquire for local use and also to 'rent/use' for off-site use.

In the context of electronics signatures, a common format (also) supporting electronic signatures and/or authentication of an electronic document is the well-known PDF format. An extended framework to that is PAdES (PDF Advanced Electronic Signatures) providing a set of restrictions and extensions to the PDF format making it more suitable for using and handling Advanced Electronic Signatures and e.g. enabling so-called LTV (long-term validation). An electronic signature, technically implemented under PAdES, has the status of an advanced electronic signature signifying that the signature is uniquely linked to the signatory; the signature is capable of identifying the signatory; only the signatory has control of the data used for the signature creation; and it can be identified if data attached to the signature has been changed after signing. Other similar or corresponding frameworks are e.g. XAdES (XML Advanced Electronic Signatures) or CAdES (CMS Advanced Electronic Signatures; CMS - Cryptographic Message Syntax), ASiC (Associated Signature Containers), etc.

At least one known way of applying electronic signatures under PAdES mimics the workflow of how physical documents are physically signed to a very high degree where the persons electronically signing a document (electronically) signs one after another, whereby subsequent signatories at least in some form validates previous signatories in addition to signing the document. As an example, person/entity A electronically signs electronic document D with its electronic signature, whereas subsequent signatory B electronically signs document D with/including the signature of person/entity A, etc. Accordingly, in such electronic signature systems, the workflow - by inherency - is serial. However, this is not efficient, in particular for situations involving several documents and several signatories where perhaps different signatories need to sign different documents with and without overlap. Additionally, when applying electronic signatures involving computationally complex crypto-function, the above electronic signature system needs to encrypt (due to signing) a large amount of data several times since the document is encrypted several times (once for each signatory). This leads to increased computational effort and increased related power consumption.

It would be useful to provide a computer-implemented method (and system or device for carrying out the computer-implemented method) of providing at least one electronic signature for a plurality of electronic documents with reduced computational complexity and/or effort.

It would also be a benefit to have a computer-implemented method (and corresponding system or device) of providing at least one electronic signature for a plurality of electronic documents that is reliable and flexible, e.g. or preferably while maintaining a certain level of security and/or integrity.

Additionally, it would be an advantage to provide a computer-implemented method (and corresponding system or device) of providing at least one electronic signature for a plurality of electronic documents enabling or providing an optimised work- or processing flow.

### Summary

It is an object to provide a computer-implemented method of providing at least one electronic signature for a plurality of electronic documents (and corresponding system or device) with reduced computational complexity and/or effort, that is reliable and flexible, and/or enables or provides an optimised work- or processing flow.

A first aspect of the invention is defined in claim 1.

According to the first aspect, one or more of these objects is/are achieved at least to an extent by a computer-implemented method of providing one or more electronic signatures for a plurality of electronic documents (in any suitable format, e.g. PDF, XML, etc.). The method comprises obtaining or deriving a representative or unique value (or alternatively two or more values) for each of the plurality of electronic documents that are determined or indicated to (subsequently) having to be electronically signed (depending on use or application preferably or e.g. in a secure way) by a signatory user (or alternatively two or more signatory users). In some embodiments, the representative or unique value is a hash value or alternative any other suitable representative or unique value(s) for an electronic document. Alternatively, other suitable (non-hash) functions may be used that can generate one or more representative or unique values for an electronic document, such as document fingerprinting, etc. The representative or unique value(s) may be derived or obtained on the basis of the electronic documents or on the basis of one or more data structure comprising or representing the electronic documents e.g. comprising further data, such as meta-data, etc.

The method further derives a combined representative or unique value (or alternatively two or more combined representative or unique values) on the basis of the representative or unique values obtained or derived for the plurality of electronic documents. The combined representative or unique value is preferably such that even a slight change of even one of the documents will cause a substantially different value. In some embodiments, the combined representative or unique value is a hash value (also referred to herein as a combined hash value). The combined representative or unique value(s) may be derived on the basis of the representative or unique values or on the basis of one or more data structure comprising or representing the representative or unique values e.g. comprising further data, such as meta-data, etc.

Typically, the representative or unique value for a particular document is smaller, and often even much smaller, in size compared to the size of the particular document. This will typically also be the case for the combined representative or unique value.

The method further transmits or provides access to the plurality of electronic documents (or strictly speaking rather/typically copies thereof) to a client device (one or more) being accessible, at some time of use, to/for the signatory user (i.e. client devices doesn't necessarily involve ownership). The method may also transmit or provide access to the combined representative or unique value to a client device (one or more) being accessible, at some time of use, to/for the signatory user. The combined representative or unique value and the plurality of electronic documents does not need to be transmitted or otherwise made available to or by the same device or system or even in the same manner. The client device may e.g. be used to log-on to a system to download or access the data, or it may simply be e-mailed to an e-mail address of the signatory user and accessed using a client device. In some embodiments, the combined representative or unique value is not transmitted or made available to a client device. The representative or unique value(s) and/or the combined representative or unique value(s) can perfectively well be generated by a client device, as long as there is consistency with the ways or mechanisms that should be used to generate the values, e.g. one or more predetermined particular hash or other functions is used. Validation can be carried out simply by generating the values again using the same predetermined functions for the same electronic documents. At some time, the client device displays the plurality of electronic documents or a representation thereof to the signatory user (so the user can see what is requested to be signed), typically in a user interface, and awaits user acceptance/approval. The method further comprises electronically signing the combined representative or unique value by an electronic signature of the signatory user, resulting in an electronically signed combined representative or unique value, in response to electronically registering that the signatory user has accepted to sign each of the plurality of electronic documents determined or indicated to having to been electronically signed. Accordingly, electronically signing the combined representative or unique value constitutes electronically signing all the electronic documents. The electronic signature may be applied fully locally, i.e. on a client device, or by logging in to a secure server. User identification and/or authentication in various ways, as generally known, prior to being shown the electronic documents or at least before signing, may also be carried out.

In this way, an electronic signature needs to be applied only once regardless of how many documents that needs to be signed. This is especially significant for electronic signing involving crypto-processing (such as encryption) as this processing generally is computationally complex and/or in certain setups may require use or involvement of specialised hardware such as Hardware Security Modules (HSMs). Additionally, it is also computationally much simpler to apply an electronic signature, encryption, or other crypto-processing function to the much smaller combined representative or unique value(s) than to an electronic document let alone to a plurality of electronic documents. It is typically also computationally much simpler (i.e. requiring less operations and power) carrying out hash functions or similar functions than performing encryption or other suitable crypto-processing. Additionally, the combined representative or unique values and/or the representative or unique values does not need to (but can be) handled in a secure way, since validation may be carried out e.g. centrally simply by generating these values again for the particular electronic documents or comparing with stored previously generated values. In other words, the combined representative or unique values and/or the representative or unique values and the methods of generating them are not as security sensitive as encryption or other suitable crypto-processing functions. Furthermore, encryption or other suitable crypto-processing functions are - at least in certain schemes or embodiments device restricted (i.e. needs to be executed on/by a specific device or a device having stored or secure access to e.g. an encryption key, etc.). Contrarily, most unique fingerprinting methods, such as hash functions or similar, are not device restricted.

In some embodiments, the electronic signature of the (one or more) signatory user(s) are an advanced electronic signature signifying that the electronic signature is uniquely linked to the signatory user; the signature is capable of identifying the signatory user; only the signatory user has (or should have without breach, etc.) control of data used for the signature creation; and it can be established if data attached to the signature has been changed after signing.

In some embodiments, the electronic signature is applied by encrypting the combined representative or unique value(s) according to a predetermined encryption scheme or method that is, preferably uniquely, tied or associated with the user. In some further embodiments, the encryption scheme or method is asymmetrical and the electronic signature is applied by encrypting the combined representative or unique value(s) using a private key (of a private and public key pair) belonging to the user applying the signature. Alternatively, other (also non-encryption based) signing schemes or methods may be used.

In some embodiments, the method further comprises transmitting or providing access to the electronically signed combined representative or unique value to or for a server (or another device or system) and validating, at the server (or another device or system), the electronic signature of the signatory user.

In some further embodiments,
- the step of electronically signing the combined representative or unique value comprises
   ∘ encrypting the combined representative or unique value (or a copy thereof), e.g. using a private cryptographic key associated with the signatory user, and
- the step of validating the electronic signature of the signatory user comprises decrypting the electronically signed combined representative or unique value, e.g. using a public cryptographic key associated with the signatory user, and comparing the resultant value with a stored original, a re-generated, or the generated combined representative or unique value and in case of a match designating successful validation.

In some embodiments, the method further comprises a step of transmitting or providing access to the combined representative or unique value to or for the client device, and e.g. storing the combined representative or unique value as a stored original combined representative or unique value. As mentioned, it is not strictly necessary to store the combined representative or unique value as it can relatively simply be generated again for validation or other purpose given the plurality of electronic documents. In alternative embodiments, the combined representative or unique value is not transmitting or otherwise provided to the client device as it can be electronically signed via access e.g. to a server, as mentioned.

In some embodiments, the plurality of electronic documents is determined or indicated to having to be electronically signed by both a first signatory user (or a first group of signatory users) and a second signatory user (or a second group of signatory users) and the method comprises:
- transmitting or providing access to (e.g. copy of) the combined representative or unique value to or for a first client device being accessible to the first signatory user and to or for a second client device being accessible to the second signatory user,
- displaying the plurality of electronic documents to the first and the second signatory user, respectively by the first and the second client device,
- electronically signing the combined representative or unique value by a first electronic signature of the first signatory user, resulting in a first electronically signed combined representative or unique value, in response to electronically registering that the first signatory user has accepted to sign each of the plurality of electronic documents, and
- electronically signing the combined representative or unique value by a second electronic signature of the second signatory user, resulting in a second electronically signed combined representative or unique value (being different from the first electronically signed combined representative or unique value), in response to electronically registering that the second signatory user has accepted to sign each of the plurality of electronic documents.

In some embodiments, the representative or unique value is a hash value derived by applying a hash function to one or more data structures comprising or representing one of the plurality of electronic documents.

In some embodiments, the combined representative or unique value is a hash value derived by applying a hash function to one or more data structure comprising or representing the representative or unique values for the plurality of electronic documents.

In some embodiments,
- each of the plurality of electronic documents is associated with a predetermined document type (not file type) selected from a group of predetermined document types,
- each of the plurality of signatory users has been designated as having a predetermined role selected from a group of predetermined roles,
- an execution data structure comprises
   ∘ a number of document type data items, each representing one document type from the group of predetermined document types,
   ∘ a number of role data items, each representing a role from the group of predetermined roles,
   ∘ data linking each document type data item to at least one role data item, each link between a document type data item and a role data item constituting or forming a document type and role data pair,
   ∘ execution data for at least some document type and role data pairs, the execution data for a particular document type and role data pair representing an execution sequence or order value of the particular document type and role data pair, and
wherein the method comprises generating data representing an execution plan by:
- determining a document type data item for each of the plurality of electronic documents,
- for each determined document type data item determining a number of its document type and role data pairs using the execution data structure,
- for each determined document type and role data pair, determining its execution sequence or order value and its role data item,
- determining, for each role data item of the determined document type and role data pair(s), at least one receiving signatory user, of the plurality of signatory users, being associated with the particular role data item, and
- generating the data representing an execution plan by ordering the plurality of electronic documents according their respective execution sequence or order values.

The execution data structure effectively enables or provides control of the signature ordering of electronic documents by 'binding' or linking documents of a given document type together with appropriate roles (and thereby recipient signatory users) and with a signature ordering. The execution plan expediently determines and controls what electronic documents to send to what users (via their roles) and in what ordering (given by the document's respective execution sequence or order value in an electronic signature workflow.

Accordingly, the execution data structure controls a server or another device to transmit or provide electronic documents for electronic signature in a hybrid serial/parallel way rather than a strictly serial way. At each step of sending or providing a number of documents, relevant documents are sent to as many recipients as possible or preferred in parallel while still adhering to ordering restrictions (e.g. signatory user(s) 'XX' should sign before signatory user(s) 'YY'). In other words, the individual steps are done in serial while transmission/provision and signing is done in parallel within each step. This improves the workflow in relation to properly obtaining electronic signature from relevant users and effectively reduces the overall time in obtaining the signatures or at least greatly increases the likelihood of reduced time thereof, in particular compared to a strictly serial way of obtaining electronic signatures.

A role (type) is associated with at least one specific signatory user but two or more signatory users may be associated with a same role (type). The roles are significant in optimally determining the ordering of the transmission/provision and signing of the documents.

In some embodiments, the method further comprises dividing the electronic documents of the plurality of electronic documents into respective document sets according to what execution sequence or order value an electronic document is associated with according to the execution data structure, so that each document set comprises only electronic documents having the same execution sequence or order value.

In some embodiments, the method comprises transmitting or providing access to the combined representative or unique value and/or the electronic documents only of a particular document set as a respective batch where batches of respective document sets are transmitted in an ordering as set or controlled by its execution sequence or order value.

In some embodiments, the validation of electronic signing of documents of one batch of a document set needs to be successful before initiating transmission or provision of a next batch of a combined representative or unique value and/or electronic documents of a next document set.
A second aspect of the invention is defined in claim 12.

According to the second aspect is provided a computer-implemented method of providing a plurality of electronic documents for electronic signature to a number of client devices respectively accessible by a plurality of signatory users, wherein the plurality of electronic documents is determined or indicated to having to be electronically signed by a plurality of signatory users and wherein
- each of the plurality of electronic documents is associated with a predetermined document type selected from a group of predetermined document types,
- each of the plurality of signatory users has been designated as having a predetermined role selected from a group of predetermined roles,
- an execution data structure comprises
   ∘ a number of document type data items, each representing one document type from the group of predetermined document types,
   ∘ a number of role data items, each representing a role from the group of predetermined roles,
   ∘ data linking each document type data item to at least one role data item, each link between a document type data item and a role data item constituting or forming a document type and role data pair, and
   ∘ execution data for at least some document type and role data pairs, the execution data for a particular document type and role data pair representing an execution sequence or order value of the particular document type and role data pair, and
wherein the method comprises generating data representing an execution plan by:
- determining a document type data item for each of the plurality of electronic documents,
- for each determined document type data item determining a number of document type and role data pairs using the execution data structure,
- for each determined document type and role data pair, determining its execution sequence or order value and role data item, and
- determining, for each role data item of the determined document type and role data pair(s), at least one receiving signatory user, of the plurality of signatory users, being associated with the particular role data item, and
wherein the method further comprises
- transmitting or providing access to the plurality electronic documents in an ordering as set or controlled by the respective execution sequence or order value of the plurality electronic documents.

The execution data structure effectively enables or provides control of the signature ordering of electronic documents by 'binding' or linking documents of a given document type together with appropriate roles (and thereby recipient signatory users) and with a signature ordering. The execution plan expediently determines and controls what electronic documents to send to what users (via their roles) and in what ordering (given by the document's respective execution sequence or order value in an electronic signature workflow.

Accordingly, the execution data structure enables control of how a server or another device and/or a computer-implemented (e.g. according to the first aspect) transmits or provides electronic documents for electronic signature in a hybrid serial/parallel way rather than a strictly serial way.

In some embodiments, control or validation is included between each ordering step (or at least some of them) checking that the signatures of the previous step is correctly signed (i.e. checking the correct persons/users, e.g. also with the correct roles, have duly electronically signed the correct documents). In some such embodiments, if the control or validation check is not fully satisfactorily then the operation may be halted or actions of the previous step (or at least the ones that did not pass the validity check) may be repeated e.g. in corrected form. This ensures avoiding wasted work (or at least reduces the risk thereof) e.g. if subsequent signatory users applies signatures that is invalid or needs to be re-done.

The control or validation may correspond to the validation as described in connection the first aspect.

In some embodiments, the method further comprises dividing the electronic documents of the plurality of electronic documents into respective document sets according to what execution sequence or order value an electronic document is associated with according to the execution data structure, so that each document set comprises only electronic documents having the same execution sequence or order value.

In some embodiments, the method comprises transmitting or providing access to the electronic documents (and/or e.g. to a combined representative or unique value according to the first aspect) only of a particular document set as a respective batch where batches of respective document sets are transmitted in an ordering as set or controlled by its execution sequence or order value.

At each ordering step of sending or providing a number of documents, relevant documents are sent to as many recipients as possible or preferred in parallel while still adhering to ordering restrictions (e.g. signatory user(s) 'XX' should sign before signatory user(s) 'YY'). In other words, the individual steps are done in serial while transmission/provision and signing is done in parallel within each step. This improves the workflow in relation to properly obtaining electronic signature from relevant users and effectively reduces the overall time in obtaining the signatures or at least greatly increases the likelihood of reduced time thereof, in particular compared to a strictly serial way of obtaining electronic signatures.

It is noted, that although the first and second aspect can function independently, they work well in combination, e.g. with the execution plan of the second aspect controlling the ordering of how and when electronic documents are provided for electronic signature according to the first aspect.

The present invention also relates to an electronic signature computer system or device wherein the computer system or device is adapted to execute the method and embodiments thereof according to the first aspect and/or the method and embodiments thereof according to the second aspect.

The present invention also relates to non-transient computer-readable medium, having stored thereon, instructions that when executed by a computer system or device cause the computer system or device to perform or execute the method and embodiments thereof according to the first aspect and/or the method and embodiments thereof according to the second aspect.

According to another aspect of the present invention, a computer system or device is provided wherein the computer system or device is adapted to execute the method(s) and embodiments thereof as disclosed herein.

According to yet another aspect of the present invention, a non-transient computer-readable medium, having stored thereon, instructions that when executed by a computer system or device cause the computer system or device to perform the method(s) and embodiments thereof as disclosed herein.

### Definitions

All headings and sub-headings are used herein for convenience only and should not be constructed as limiting the invention in any way.

The use of any and all examples, or exemplary language provided herein, is intended merely to better illuminate the invention and does not pose a limitation on the scope of the invention unless otherwise claimed. No language in the specification should be construed as indicating any non-claimed element as essential to the practice of the invention.

This invention includes all modifications and equivalents of the subject matter recited in the claims appended hereto as permitted by applicable law.

### Brief description of the drawings

Figure 1 schematically illustrates a block diagram of a server or central device/system and a client or user device/system electronically signing a number of electronic documents according to some embodiments;
Figure 2 schematically illustrates a flow chart of electronically signing a number of electronic documents according to some embodiments e.g. involving a server or central device/system and a client or user device/system, e.g. as shown in Figure 1;
Figure 3 schematically illustrates a block diagram of a server or central device/system and a client or user device/system electronically validating one or more electronic signatures of one or more electronic documents;
Figure 4 schematically illustrates a flow chart of electronically validating one or more electronic signatures of a plurality of electronic documents according to some embodiments e.g. involving a server or central device/system and a client or user device/system, e.g. as shown in Figures 1 and 3;
Figure 5 schematically illustrates hybrid serial/parallel execution of obtaining electronic signatures;
Figure 6 schematically illustrates a flow chart of hybrid serial/parallel execution of obtaining electronic signatures; and
Figure 7 schematically illustrates a block diagram of embodiments of an electronic data processing device or system implementing various embodiments of the method(s) disclosed herein.

### Detailed description

Various aspects and embodiments of a computer-implemented method and a computer system or device implementing the various aspects and embodiments of the computer-implemented method as disclosed herein will now be described with reference to the figures.

When/if relative expressions such as "upper" and "lower", "right" and "left", "horizontal" and "vertical", "clockwise" and "counter clockwise" or similar are used in the following terms, these typically refer to the appended figures and not necessarily to an actual situation of use. The shown figures are schematic representations for which reason the configuration of the different structures as well as their relative dimensions are intended to serve illustrative purposes only.

Some of the different components are only disclosed in relation to a single embodiment of the invention, but is meant to be included in the other embodiments without further explanation.

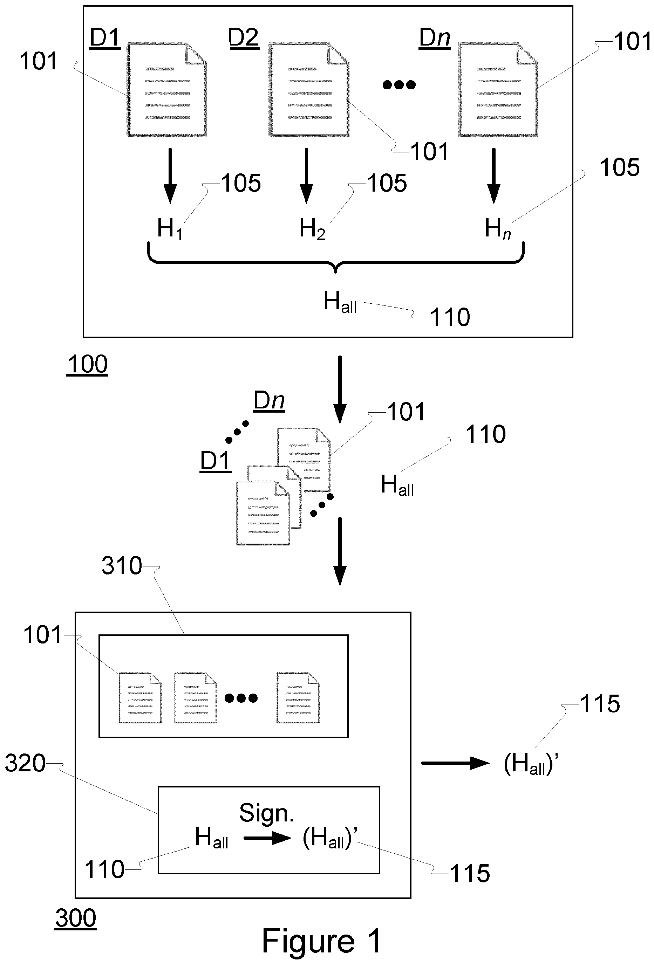

Figure 1 schematically illustrates a block diagram of a server or central device/system and a client or user device/system electronically signing a number of electronic documents according to some embodiments.

Illustrated are a server or central device or system 100 (herein also referred to only as a server), a client or user device or system 300 (herein also referred to only as a client device), and a plurality of electronic documents 101 to be electronically signed according to some embodiments as disclosed herein.

The electronic documents may be in any suitable format such as PDF, XML, or any other suitable format supporting or enabling electronic signatures thereof. According to the first aspect and as disclosed herein, the server or central device or system 100 calculates a representative or unique value 105 (or alternatively a plurality of values) for each of the plurality of electronic documents 101 that is to be electronically signed by at least one signatory user. Alternatively, the representative or unique value 105 for each document 101 have been generated (locally or externally) previously and the server or central device or system 100 simply obtains or retrieves the representative or unique values 105 for each document 101 rather than deriving them at this time.

In the illustrated example of Figure 1, there are *n* (*n* being two or more) documents labelled D1 - Dn and n representative or unique values 105 labelled H1 - Hn.

In preferred embodiments, the respective representative or unique values 105 are hash values where at least one hash value (for a particular document) has been derived according to a predetermined hash function or method as generally known specifically on the basis of the particular document that it is for. Alternatively, other suitable (non-hash) functions may be used that can generate one or more representative or unique values for an electronic document, such as document fingerprinting, etc.

Typically, the representative or unique value 105 for a particular document 101 is smaller, and often even much smaller, in size compared to the size of the particular document 101. This is the case in particular for hash values.

After a representative or unique value 105 has been calculated or otherwise obtained for each (relevant) document 101, a combined representative or unique value 110 (labelled Hₐₗₗ in the Figure) is derived on the basis of the representative or unique values (H1, ..., Hn). Alternatively, the server or central device or system 100 simply obtains the combined representative or unique value 110 (Hₐₗₗ), e.g. together with the electronic documents 101, from elsewhere rather than calculating it locally. In such a situation, the server or central device or system 100 does not need to derive or receive the representative or unique values (H1, ..., Hn) 105.

In preferred embodiments, the combined representative or unique value 110 is a combined hash value, i.e. a hash value generated by applying a hash function to the respective representative or unique values 105 (that, as mentioned, may also be hash values) as input. Alternatively, other suitable functions or schemes may be used to generate a representative or unique combined value or set of values in another suitable way.

In some embodiments, more than one combined representative or unique value 110 may be derived or obtained and used as disclosed herein rather than using a single combined representative or unique value 110.

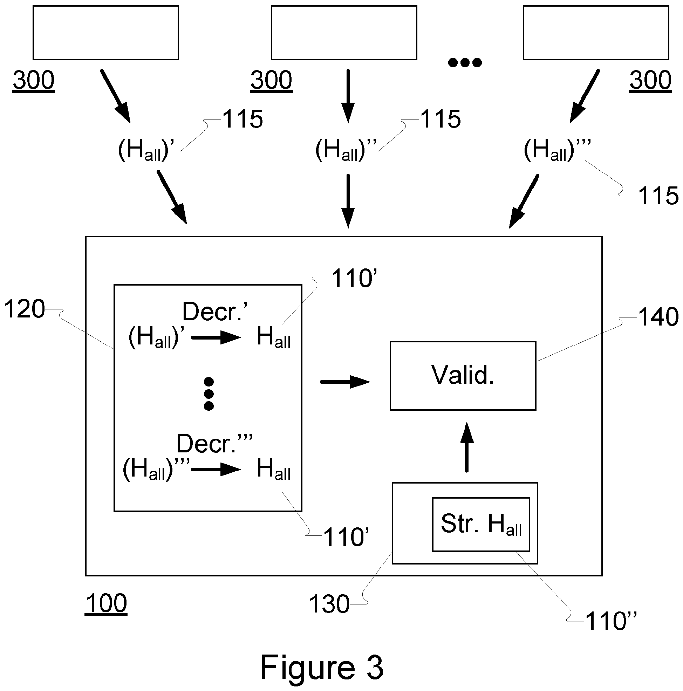

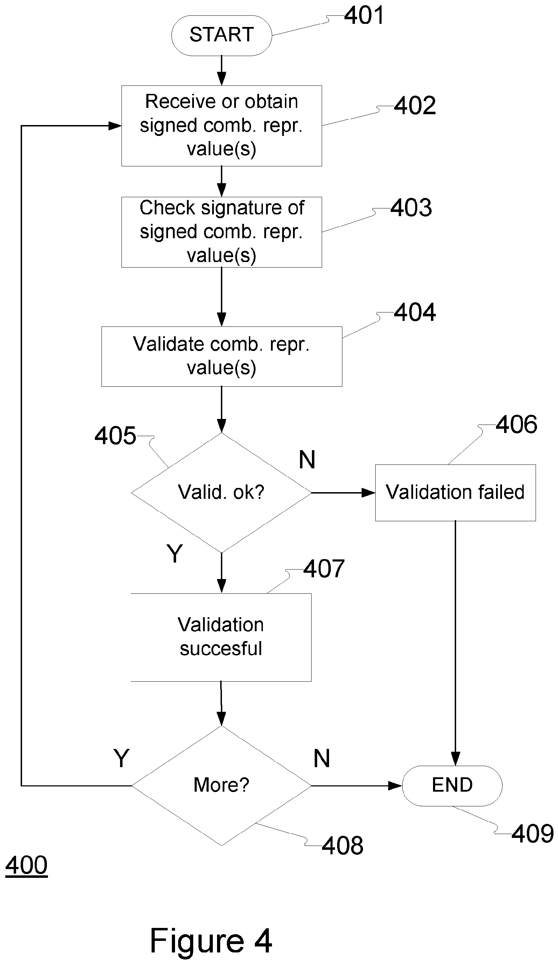

After the combined representative or unique value(s) 110 Hₐₗₗ is(are) derived or obtained by/at the server 100 it (or practically speaking a copy of it) is in some embodiments directly or indirectly (and securily or non-securily) transmitted or otherwise made available together with the relevant electronic documents 101 to the client device 300 for electronic signature. In some embodiments, the combined representative or unique value 110 Hₐₗₗ is simply transmitted as part of an e-mail addressed or sent to a, e.g. or preferably verified or validated, e-mail address of the user to electronically sign the documents 101 in question. The e-mail or the transmission may be secured or not depending on a security level or preference. Often - but depending on use or application - there is no special need for secrecy or secure handling of the combined representative or unique value 110 (as validation - see e.g. in the following and/or Figs. 3 and 4 - fairly simply can detect tampering, etc.) or the documents 101 (unless they contain confidential information) simplifying handling and operation.

If several users need to sign all the documents 101 that the combined representative or unique value 110 is for, then each of those users (via respective client devices 300) may receive the combined representative or unique value 110 and the relevant electronic documents 101. This saves computationally effort, as the combined representative or unique value 110 then only needs to be derived once.

Once received by a client device 300, the electronic documents 101 are displayed or shown, e.g. by a display 310 or other, via a suitable (e.g. graphical) user interface or similar to a user that e.g. is identified or designated to duly electronically sign the documents 101. The user is also given, e.g. via the user interface, a way of applying an electronic signature (or initiate its application) to the displayed documents should the user chose to. Depending on security level or preferences, the client device 300 may e.g. require identification and/or validation in some form of the user (e.g. involving an elD or similar of the user) operating the client device 300 before being presented with the documents 101 and/or the ability of being able to sign them electronically.

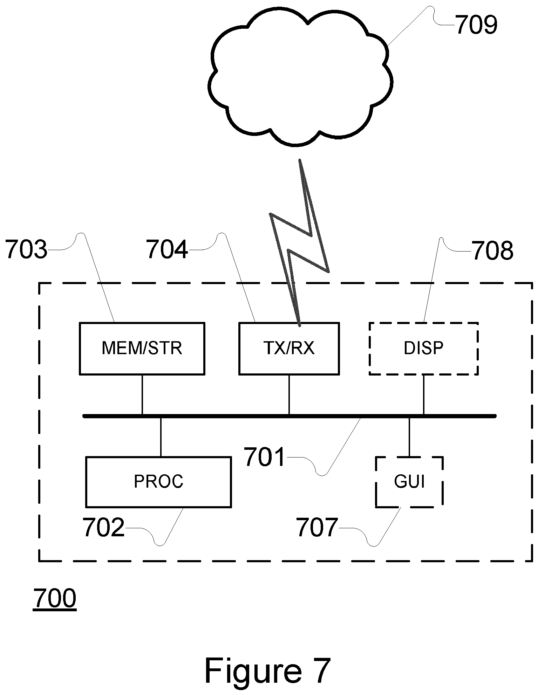

If the user wishes to apply a signature to or for the displayed documents 101 and indicates this by an appropriate user action in the user interface (e.g. by selecting a button) or otherwise, then an electronic signature is applied, e.g. by one or more processing units 320 (see e.g. also 702 in Figure 7), for or to the electronic documents 101 preferably in a secure reliable way. Alternatively, the electronic signature is applied by a separate data processing system or device (not shown). According to the first aspect as disclosed herein, the electronic signature of the user is applied to the combined representative or unique value 110, resulting in an output 115 designated Hₐₗₗ' in the Figure, rather than to the electronic documents 101 individually or combined.

This has several advantages. For example, the signature needs to be applied only once regardless of how many documents that needs to be signed. This is especially significant for electronic signing involving crypto-processing (such as encryption) as this processing generally is computationally complex and/or in certain setups may require use or involvement of specialised hardware such as Hardware Security Modules (HSMs). Additionally, it is also computationally much simpler to apply a crypto-processing function or other to a much smaller combined representative or unique value or set of values 110 than to an electronic document let alone to a plurality of electronic documents.

In some embodiments, the electronic signature is applied by encrypting the combined representative or unique value(s) 110 according to a predetermined encryption scheme or method that is, preferably uniquely, tied or associated with the user. In some further embodiments, the encryption scheme or method is asymmetrical and the electronic signature is applied by encrypting the combined representative or unique value(s) 110 using a private key (of a private and public key pair) belonging to the user applying the signature. Alternatively, other (also non-encryption based) signing schemes or methods may be used.

In this way, electronically signing the combined representative or unique value(s) 110 according to the first aspect constitutes electronically signing all the documents 101.

After signing, the output value Hₐₗₗ' 115 (being the electronically signed combined representative or unique value) may be transmitted directly or indirectly to or otherwise provided for another device or system (see e.g. Figure 3) for further processing, e.g. including validation, control, and/or the like. The other device or system may e.g. be the server or central device or system 100 or another device or system.

In some embodiments, two or more output values 115 are generated rather than a single value.

The validation, etc. may e.g. be done as described in connection with Figures 3 and 4.

In some alternative embodiments, the documents 101 are not transmitted from the server 100 to the client device 300 together with the combined representative or unique value(s) 110 (Hₐₗₗ) (e.g. in particular if the server 100 does not derive H1, ..., Hn from the documents). In such embodiments, the documents may by provided in another way, e.g. from another device or system (not shown), e.g. such as a document server or the like.

In some further embodiments, H1, ..., Hn is also transmitted or otherwise made available to the client 300 so that the client device 300 can verify the authenticity or correctness of the received combined representative or unique value 110 Hₐₗₗ by deriving it and comparing to the received value. This typically will require knowledge or identification of the function(s) used to generate the received combined representative or unique value(s) 110 Hₐₗₗ.

In some embodiments, the representative or unique values 105 (H1, ..., Hn) and/or the combined representative or unique value 110 (Hₐₗₗ) is/are not transmitted or otherwise made available to any client device. The representative or unique value(s) and/or the combined representative or unique value(s) can be generated in such cases by a client device based on the electronic documents to be signed, as long as there is consistency with the ways or mechanisms that should be used to generate the values, e.g. that one or more predetermined particular hash or other functions is used.

In some embodiments, a client device receives the representative or unique values 105 (H1, ..., Hn) and locally generates the combined representative or unique value 110 (Hₐₗₗ) in a predetermined way.

In some embodiments, the documents and the combined representative or unique value 110 Hₐₗₗ is transmitted or provided according to roles associated with signatory users as disclosed herein.

In some embodiments, the (same) plurality of electronic documents 101 is to be electronically signed by both at least a first signatory user and a second signatory user. In such embodiments, the combined representative or unique value 110 and the documents are made available at or to a client device 300 of each signatory user, where a signatory user respectively signs or encrypts the combined representative or unique value 110 by their respective electronic signatures leading to two different output values (e.g. Hₐₗₗ' and Hₐₗₗ") that are then separately transmitted to the server 100.

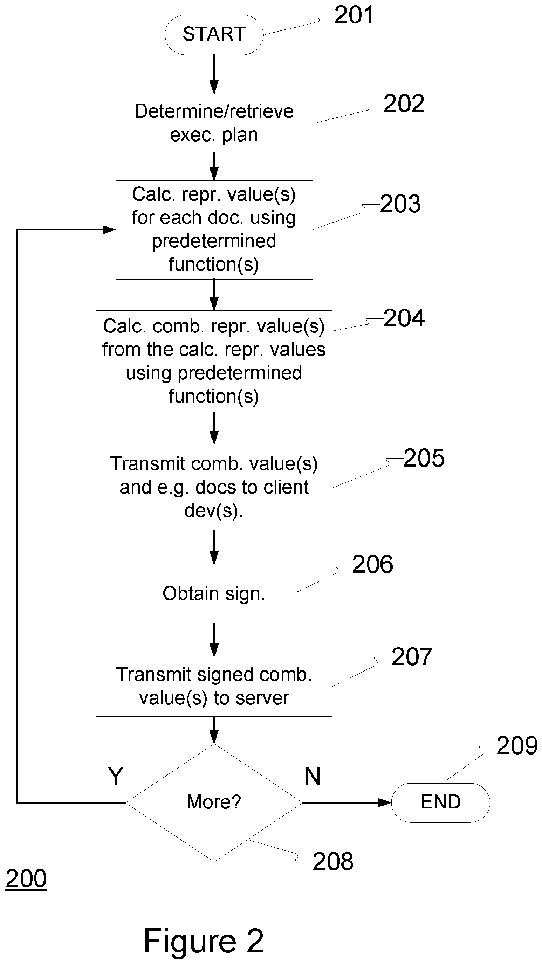

The server 100 may e.g. correspond to the one illustrated in 7. The client device 300 may e.g. also correspond to the one illustrated in 7. The server 100 and/or the client device 300 may e.g. function as otherwise disclosed herein and e.g. as described in connection with Figure 2.

Figure 2 schematically illustrates a flow chart of electronically signing a number of electronic documents according to some embodiments involving a server or central device/system and a client or user device/system, e.g. as shown in Figure 1

Shown in Figure 2 is a flow chart of an embodiment of a computer-implemented method 200 of electronically signing a number of electronic documents where the computer-implemented method e.g. is performed by an electronic data processing device or system, e.g. such as the one illustrated in Figure 7.

At step 201, the method starts and potentially is initialized, etc.

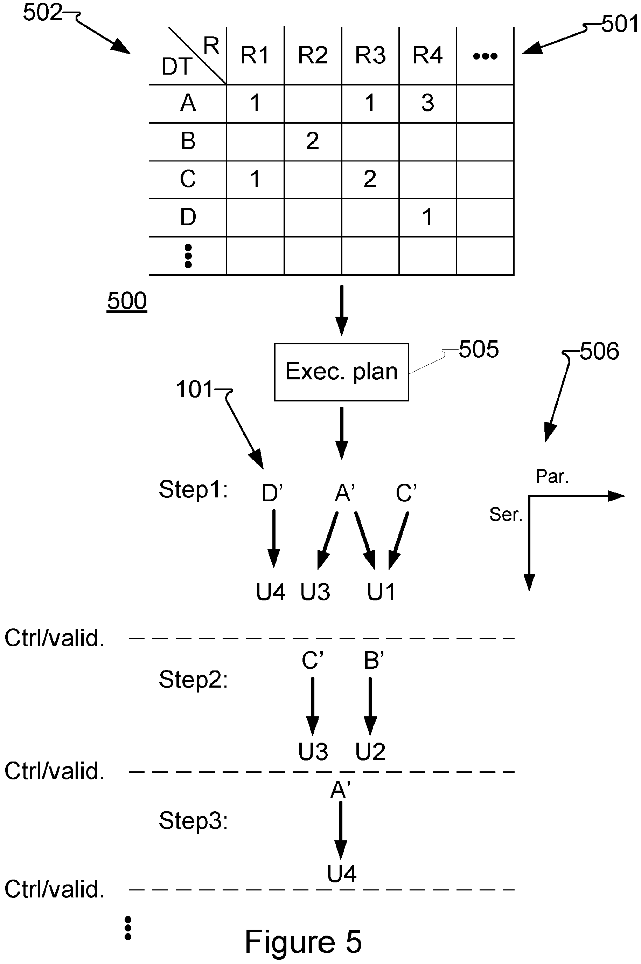

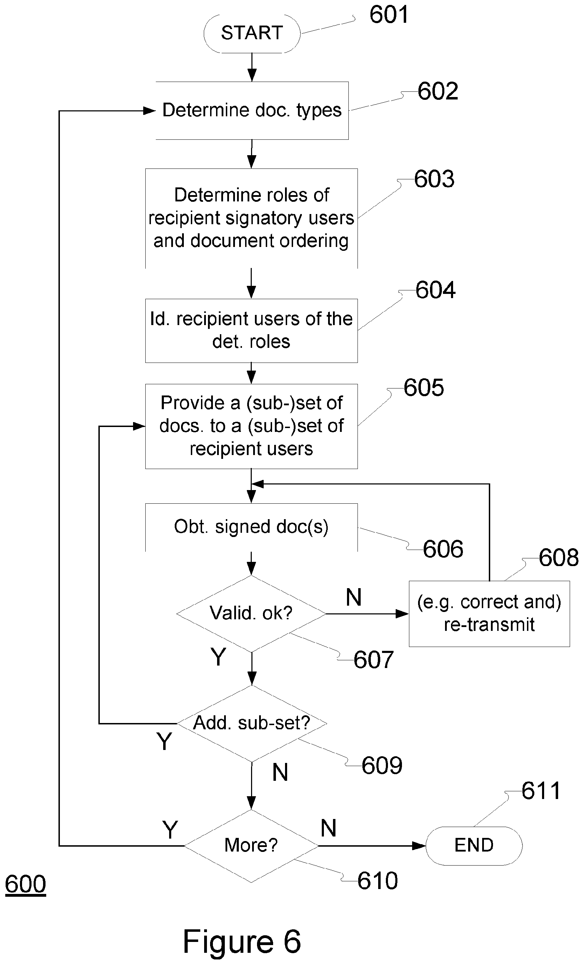

At step 202, data representing an execution plan or schedule (herein also simply referred to as execution plan; see e.g. 505 in Figure 5) is determined or obtained. The execution plan may e.g. be determined according to the second aspect as disclosed herein and e.g. as shown and explained in connection with Figures 5 and 6. The execution plan controls what plurality of electronic documents (see e.g. 101 in Figure 1) should be signed and by which users and/or by which roles, and according to what ordering. In the following, wherever 'user' is written can equally signify a role (of a user). At step 202, a plurality of documents to be signed by at least one user is identified using the execution plan.

Step 202 is optional and if not included, a determination of what plurality of electronic documents to be signed and by which signatory user(s) is determined or obtained in another way, e.g. as part of step 201 or another step.

After the electronic documents to be signed has been identified together with at least one recipient user to sign them, then, at step 203, at least one representative or unique value (see e.g. 105 in Figure 1) for each of the plurality of electronic documents 101 that is to be electronically signed by at least one signatory user is derived or obtained using one or more predetermined functions, e.g. as explained in connection with Figure 1 and/or elsewhere. In some embodiments, at least one hash value is derived by one or more predetermined hash functions as the at least one representative or unique value, or alternatively obtained from elsewhere, for each relevant document e.g. as described in connection with Figure 1 and/or elsewhere. The representative or unique value(s) may be derived or obtained on the basis of the electronic documents or on the basis of one or more data structure comprising or representing the electronic documents e.g. comprising further data, such as meta-data, etc.

At step 204, one or more combined representative or unique values (see e.g. 110 in Figure 1) is/are derived on the basis of the representative or unique values obtained at step 203, e.g. as explained in connection with Figure 1 and/or elsewhere. In some embodiments, at least one hash value is derived by one or more predetermined hash functions (using the output of step 203 as input) as the at least one combined representative or unique value. The combined representative or unique value(s) may be derived on the basis of the representative or unique values or on the basis of one or more data structure comprising or representing the representative or unique values e.g. comprising further data, such as meta-data, etc.

As mentioned, the generated one or more combined representative or unique values for the particular combination of the specific electronic documents to be electronically signed are preferably such that even a slight change of even one of the documents will give quite a different value/different values of the one or more combined representative or unique values. The same may and typically will apply for the representative or unique values of step 203.

The function(s) of step 203 may be the same function(s) of step 204, or alternatively they can be different.

At step 205, the one or more combined representative or unique values (e.g. together with the documents) is directly or indirectly transmitted or otherwise made available to one or more client devices (see e.g. 300 in Figures 1, 3 and 7), e.g. as explained in connection with Figure 1. If the documents is not provided by the method 200 they are provided to or for the client device in another suitable way.

After receipt or access by the respective client device(s), the relevant respective signatory user(s) are shown, e.g. on respective client devices, the documents that should be signed and at step 206 and electronically signature is obtained, e.g. as explained in connection with Figure 1 and/or elsewhere. More particularly and according to the first aspect as disclosed herein, the electronic signature of a respective user is applied (e.g. as explained in connection with Figure 1 and/or elsewhere) to the one or more combined representative or unique values resulting in a signed output (see e.g. 115/Hₐₗₗ' in Figure 1) rather than to the electronic documents, individually or combined. In some embodiments, the one or more combined representative or unique values is encrypted according to a predetermined encryption scheme or method that is, preferably uniquely, tied or associated with the signing user. In some further embodiments, the one or more combined representative or unique values is/are encrypted using a private key of a private and public key pair of the signing user.

At step 207, the signed one or more combined representative or unique values is/are directly or indirectly transmitted or otherwise made available to a server or other device or system (see e.g. Figures 3 and 4) for further processing, e.g. including validation, control, and/or the like.

At step 208, it is tested whether additional electronic documents should be signed as part of this particular execution. If 'no', the method proceeds to step 209 ending at least this execution of the method 200. If 'yes', the method loops back to step 203 where a next plurality of documents to be signed are processed by steps 203 - 207. Alternatively, the method at step 208 in case of 'yes' loops back to step 202, in particular if the determined/retrieved execution plan of the just completed iteration did not already determine the execution plan or steps for the next plurality of documents.

As described herein, in alternative embodiments, the combined representative or unique value(s) are not provided to a client device. Rather, the client device can generate the combined representative or unique value(s) from the received or accessed electronic documents to be signed (via the representative or unique value(s) for each of the electronic documents to be signed).

In other alternative embodiments, the client device receives or accesses only the documents to be signed and e.g. connects to a server (having or producing the combined representative or unique value(s) for the documents in question) and electronically signs the combined representative or unique value(s) on the server.

In alternative embodiments, the ordering of some of the steps of the method 200 may be different. What is significant is that the documents to be signed can be seen by a user in a suitable way before signing (so the user knows what is to be signed) and that the combined representative or unique value(s) also is available before signing (either to the client device or to a server executing the signature).

It is noted, that steps 203 and 204 may be performed once for all relevant documents, in which case step 208 may loop back to step 205.

The method of Figure 2 and embodiments thereof may be used as a part of or together with one or more other methods as disclosed herein.

Figure 3 schematically illustrates a block diagram of a server or central device/system and a client or user device/system electronically validating one or more electronic signatures of one or more electronic documents.

Illustrated are a number of client or user devices or systems 300 (herein also referred to only as a client device) and a server or central device or system 100 (herein also referred to only as a server), where a signed combined representative or unique value 115 is transmitted directly or indirectly from a respective client device 300 (or otherwise provided) to the server 100 for electronic validation. The number of client devices 300 may be one or more. Preferably, the signed combined representative or unique value 115 has been generated or derived according to an embodiment as described in connection with Figures 1 and/or 2 or as otherwise disclosed herein.

In the shown example, three (as an example) differently signed combined representative or unique values 115 (respectively denoted Hₐₗₗ', Hₐₗₗ", Hₐₗₗ'" in the Figure) are respectively transmitted from the client devices 300 to the server 100. In the example, three different electronic signatures have been applied to the same combined representative or unique value Hₐₗₗ (and therefore have been applied to or for a same set of electronic documents to be signed; see e.g. 101 in Figure 1) resulting in respective electronically signed combined representative or unique values denoted as Hₐₗₗ', Hₐₗₗ", Hₐₗₗ'". This could e.g. be the case if three different signatory users (and/or roles) applied electronic signatures to or for the same documents in question. It could e.g. also be the case if the electronic documents were to be signed by up to three different roles as disclosed herein. In such a case, one person (e.g. via one client device 300) could for example have two different roles and would accordingly sign the documents twice, once for each role. In such an example, two signed combined representative or unique values 115 could be generated at a single client device 300 and two signed combined representative or unique values 115 could be transmitted to the server 100 from the same client device 300. In some embodiments, the same electronic signature for one person (having two roles) is used to sign on behalf of all the roles, where the signature then may be supplemented or combined e.g. with an additional role id. I.e. one person signing for two roles (as an example having ids Role_ID1, Role_ID2) could produce the data (Hₐₗₗ'; Role_ID1) and (Hₐₗₗ'; Role_ID2). Alternatively, a different signature could be used for each role, i.e. one person signing for two roles could produce Hₐₗₗ', Hₐₗₗ" or it could be a combination of the two ways or in any other suitable way. A role is associated with at least one specific signatory user but two or more signatory users may be associated with a same role. The roles may be significant in optimally determining the ordering of the transmission and signing of the documents.

It is noted that the signed combined representative or unique values 115 does not need to, and often will not, be transmitted to the server 100 at the same time as it typically will depend on when the signature is applied.

After at least one signed combined representative or unique value 115 is received by the server 100, validation, at least in some embodiments, are carried out. In alternative embodiments, validation is not carried out until several, e.g. all, electronic signatures to be validated is received or obtained.

In some embodiments where a signature are applied by or using encryption according to a predetermined encryption scheme (e.g. by encrypting with a private encryption key of a private/public key pair belonging to a signatory user), a decryption element 120 respectively decrypts the received signed combined representative or unique values 115 (e.g. by decrypting with a public encryption key of the private/public key pair belonging to the signatory user) resulting in respective decrypted combined representative or unique values 110'.

A validation element 140 performs a validation check on the basis of the decrypted combined representative or unique values 110'. In some embodiments, the validation check comprises comparing each decrypted combined representative or unique values 110' with one or more expected values 110". The expected value(s) may be generated to use for comparison or e.g. be stored value(s) 110" stored in a memory 130 and then retrieved for comparison. If each decrypted combined representative or unique values 110' matches the expected value(s) 110" then the validation is designated as successful. If not, the validation is designated as unsuccessful or alternatively, depending on the circumstances, partly successful (e.g. that only some of the electronic signatures are successfully validated). In some embodiments, the validation is done as described in connection with Figure 4.

If a particular decrypted combined representative or unique value Hₐₗₗ 110' does not match the expected value Str. Hₐₗₗ 110" that could signify one or more different things.

It could e.g. signify that the documents presented to or at least being signed by/for the signatory user were not exactly the same as intended or expected, e.g. one or more of the documents have been altered, exchanged, and/or tampered with (even slightly if hash values or similar function was used to derive a representative or unique value (see e.g. 105/H1, ... Hn in Figure1) for each document and/or to derive a combined representative or unique value (see e.g. 110/Hₐₗₗ)). Such a situation would provide a decrypted Hₐₗₗ having the wrong value due to being representative or unique for other or altered documents.

It could e.g. also signify that another signature was used than intended or expected to sign the documents in question, e.g. a signature belonging to another (e.g. unexpected or unauthorised) user and/or another (e.g. unexpected or unauthorised) role of a user than intended or expected. Such a situation could fail to provide any decrypted value since the decryption scheme does not match/is not correct with respect to the actual encryption used to sign, e.g. by being unable to decrypt using an expected public key or by providing a decrypted Hₐₗₗ having a wrong value due to being decrypted in an incorrect way.

If roles and role ids or similar is used, e.g. as disclosed herein, then the validation may also comprise checking, e.g. using a database or other memory structure, that the person verified to have applied the electronic signature (e.g. via decryption) is also validated to be associated with the role in question. As an example, person XXX YYY is CEO of company ZZZ and should electronically sign an annual report of company ZZZ as a person XXX YYY twice, once in the role of CEO (e.g. having a role id Role_ID1) and once in the role of a member of the executive board of company ZZZ (e.g. having a role id Role_ID2). The client device 300 used by person XXX YYY to apply electronic signatures could then e.g. generate and transmit (Hₐₗₗ'; Role_ID1) and (Hₐₗₗ'; Role_ID2), where Hₐₗₗ' is decrypted into Hₐₗₗ and Role_ID1 and Role_ID2 can be validated against verified roles of XXX YYY. The role id may also be signed/encrypted.

The validation may also comprise checking that a given group or set of users (e.g. with correct roles) have individually signed a plurality of documents correctly (rather than validating a signature of only a single user).

The validation may also comprising checking that a given sub-group or sub-set of users (e.g. with correct roles and e.g. forming part of a batch as disclosed herein) have individually signed a plurality of documents correctly before sending the plurality of documents for further electronic signatures for a subsequent sub-group or sub-set (or subsequent batch).

If encryption is not used to apply an electronic signature, the decryption element can e.g. be replaced by another signature checking element, responsible for checking that the signed combined representative or unique value has been signed properly in another way. The validation element 140 may then use the result of the signature checking element for validation.

The decryption element 120 and the validation element 140 may e.g. be separate (as illustrated) or be combined as a single element.

The decryption element 120 and/or the validation element 140 may e.g. be implemented by one or more processing units (see e.g. 702 in Figure 7) and/or by one or more separate data processing systems or devices (see e.g. Figure 7). The one or more processing units and/or the one or more separate data processing systems or devices may e.g. be implemented by or comprise at least one HSM.

Instead of transmitting the signed combined representative or unique values 115 they may e.g. be provided at the server 100, e.g. by respective signatory uses electronically signing (as disclosed herein) one or more combined representative or unique values (see e.g. 101 and 320 in Figure 1 or step 206 in Figure 2) by connecting to or logging in on the server (e.g. via a client device).

The server 100 and/or the client devices 300 may e.g. function as otherwise disclosed herein and e.g. as described in connection with Figure 4.

In at least some embodiments, the client devices 300 each corresponds to client or user device(s)/system(s) explained in connection with Figures 1, 2 and/or 7. In at least some embodiments, the server 100 corresponds to client or user device(s)/system(s) explained in connection with Figures 1, 2 and/or 7.

The server or central device or system 100 may e.g. be the server or central device or system of Figure 1 (also designated 100 in Figure 1) or a different device or system.

Figure 4 schematically illustrates a flow chart of electronically validating one or more electronic signatures of a plurality of electronic documents according to some embodiments involving a server or central device/system and a client or user device/system, e.g. as shown in Figures 1 and 3.

Shown in Figure 4 is a flow chart of an embodiment of a computer-implemented method 400 of electronically validating one or more electronic signatures of a plurality of documents where the computer-implemented method e.g. is performed by an electronic data processing device or system, e.g. such as the one illustrated in Figure 7.

At step 401, the method starts and potentially is initialized, etc.

At step 402, one or more signed combined representative or unique values (see e.g. 115 in Figures 1 and 3) for a plurality of electronically signed electronic documents are received or otherwise obtained by a server or central device or system (see e.g. 100 in Figure 3) (herein also referred to only as a server) for electronic validation. The one or more signed combined representative or unique values is/are transmitted directly or indirectly from one or more client or user devices or systems (see e.g. 300 in Figure 3) (herein also referred to only as a client device) or otherwise made available to or at the server, e.g. as disclosed herein.

Preferably, the one or more signed combined representative or unique values has/have been generated or derived according to an embodiment as described in connection with Figures 1 and/or 2 or as otherwise disclosed herein. In some embodiments, the signed combined representative or unique value is a hash value of respective hash values for a plurality of electronic documents as disclosed herein.

At step 403, the signature of each of the one or more signed combined representative or unique values are checked.

In some embodiments where a signature are applied by or using encryption according to a predetermined encryption scheme or method, the signatures is checked by respectively decrypting the received signed combined representative or unique values resulting in decrypted combined representative or unique values (see e.g. 110' in Figure 3). The decryption may e.g. be carried out by a decryption element (see e.g. 120 in Figure 3). Successful decryption signify or denote that the check of the signature is successful.

If the predetermined encryption scheme or method uses a private encryption key of a private/public key pair belonging to a signatory user, the decryption may involve a public encryption key of the private/public key pair belonging to the signatory user.

In other embodiments, the signatures are checked in another way.

At step 404, the one or more combined representative values is/are validated. The validation may be done for a received signed combined representative or unique value (if the signature has been validly checked at step 403) or a derived value of the signed combined representative or unique value. The derived value may e.g. be the decrypted combined representative or unique value (see e.g. 110' in Figure 3) if encryption has been used to apply the signature.

In some embodiments, the decrypted value(s) (for each combined representative value) is/are validated by comparing it to one or more expected values (see e.g. 110" in Figure 3). The expected value(s) may be generated 'on the fly' to use for comparison or e.g. be pre-generated and stored value(s) e.g. stored in a memory or the like and then retrieved for comparison. The expected value(s) may in particular be stored e.g. when generating or obtaining a combined representative or unique value prior to signing (see e.g. 110/Hₐₗₗ in Figure 1).

In some embodiments, the decrypted value is a hash value of a number of hash values generated for each of the plurality of electronic documents that were to be signed.

If each of the one or more decrypted combined representative or unique values 110' matches the expected value(s) 110" then the validation is designated as successful. If not, the validation is designated as unsuccessful.

The validation may also comprise checking that the signatory users that actually has signed is associated with the right role, as disclosed herein.

Steps 403 and 404 may be combined as a single step.

At step 405 it is checked whether the validation of step 404 (and/or step 403) was successful or not (yes or no).

If not, the method 400 proceeds to step 406 where validation is flagged or similar as failed and the method 400 ends at step 409. Step 406 may comprise one or more additional steps appropriately handling the situation of a failed validation. This may e.g. involve notifying one or more persons/users, e.g. the ones requesting the signature(s), about the failure. It may e.g. also involve informing the signatory user(s) and depending on the circumstances request new signature(s). Such additional steps could also be handled by another computer-implemented method.

If the test of step 405 is yes, the method 400 proceeds to step 407 where validation is flagged or similar as successful. Depending on actual implementation and/or use, the test of step 405 may also proceed to step 407 in case of partial successful validation, e.g. if only one or some of the signatures was not validated, only some of the checks (e.g. signature ok but wrong role), etc.

Step 407 may also comprise one or more additional steps appropriately handling the situation of a successful validation. This may e.g. involve one or more of: notifying one or more persons/users requesting the signature(s) about successful validation, initiating a next operation (e.g. prepare and transmit the documents for a next signatory user or group of users, i.e. a next batch), etc. Such additional steps could also be handled by another computer-implemented method.

After step 407, the method 400 proceeds to step 408 where it is tested whether any further signatures should be validated or not at the present time. If not, the method 400 proceeds to step 409 ending (at least this run or execution of) the method 400.

If the test is yes, the method 400 loops back to step 402, where a next batch of one or more signed combined representative or unique values is received or otherwise obtained for electronic validation.

If the check of step 403 fails, the method 400 may bypass step 404 and proceed directly to step 405.

The method of Figure 4 and embodiments thereof may be used as a part of or together with one or more other methods as disclosed herein.

Figure 5 schematically illustrates hybrid serial/parallel execution of obtaining electronic signatures.

Illustrated is a schematic visualisation or illustration of an execution data structure 500. As disclosed herein, the data structure 500 comprises data, e.g. data items, representing one or more predetermined roles (R1, R2, R3, R4, ...) 501 and one or more predetermined document types (A, B, C, D, ...) illustrated in a matrix like structure. It is noted, that the actual data structure seldomly (if at all) will be implemented as a matrix. For each relevant (i.e. each non-zero value) combination of a particular document type (DT) and role (R) data pair, a data value is provided that represent a number in a sequence or ordering in an electronic signature workflow. In effect, the data value controls, for a particular document of a given document type, the signature ordering/sequence, i.e. when and to which user(s)/role(s) the particular document should be sent.

For example, an illustrated value of '1' of a particular document type (DT) and role (R) (e.g. document type A and role R1) signify that a particular electronic document being of the listed document type should be sent to one or more recipient signatory users having the listed role(s) in relation to the particular document for electronic signature by the recipient user(s) as part of a first step or first batch, while '2' signify that a document should be sent in the same way as part of a second step or second batch, etc. It is noted, that the data values 1, 2, 3, etc. are not significant by themselves as long as the data values determine an ordering according to a predecided/pre-determined notation.

In other words, the data structure 500 effectively controls the signature ordering of electronic documents by 'binding' or linking documents of a given document type together with appropriate roles (and thereby recipient signatory users) and controlling a signature ordering.

From the exemplary values of the illustrated data structure 500 it can for example be seen that an electronic document of document type A is to be sent to recipient signatory user(s) having either role R1 or R3 as part of a first step/batch and is to be sent to recipient signatory user(s) having role R4 as part of a third step/batch; that an electronic document of document type C should be sent to recipient signatory user(s) having role R1 as part of the first step/batch and sent to recipient signatory user(s) having role R3 as part of the third step/batch; etc.

Roles (data items) can e.g. comprise or represent one or more of: a seller, a buyer, a witness (for legal contracts), a chairman of a tenant or other association, a chairman of a board of a directors, a CEO of a company, an external accountant for a company, and so on.

Document types (data items) can e.g. comprise or represent one or more of: a deed, a legal contract, a lease of a flat, car, etc., an annual report, and so on.

A role is typically tied to one or more specific users (being associated with that role within a particular context of the document type in question). The specific user for a particular role for a particular document is, depending on security level or preference, e.g. or preferably validated to be that particular user. Such validation may e.g. involve determining and obtaining information of an electronic ID (elD) of the particular user.

For professional use it is common to have a required or at least preferred ordering of how a given electronic document is or should be signed. Some orderings are determined e.g. by legal requirements. For example, a signatory witness testifying or declaring in relation to an account, statement, etc. of another signatory person should sign an electronic document (being a testimony) after the signatory person in question duly has signed; a witness of a legal transfer of ownership should sign an electronic document (being a transfer) only after all relevant parties have duly signed; an accountant should sign a financial annual report only after the relevant persons of the management duly has signed; and so on. Some other orderings are determined e.g. according to tradition, customs, to reduce complexity, avoiding unnecessary work, etc. For example, a buyer of property typically signs before a seller, a service provider may typically sign after a buyer of a service, articles of association is e.g. signed first by the chairman followed by other member of the board, etc.

A (known) way under PAdES and other (as previously described) typically involves a serial way of presenting electronic documents for electronic signing mimicking the workflow of how physical documents has physically been signed for a long time to a very high degree. However, as mentioned, such serial signing has drawbacks.

According to the first and the second aspect as disclosed herein, such a data structure 500 may be used by a computer-implemented method (see e.g. Figures 5 and 6) and/or a computer system or device for a particular plurality of electronic documents (to be electronically signed by one or more signatory users) to determine an efficient way of or workflow for obtaining the relevant signatures by the relevant signatory users.

In this way, a data representation, which may be referred to as an execution plan 505, of which documents should be sent or provided to which signatory users and in which order may be generated. In effect, the execution plan 505 controls how a server (e.g. a server such as 100 of Figure 1) and/or a computer-implemented method (e.g. such as 200 of Figure 2) transmits or provides the electronic documents for signature to/at a number of client or user devices or systems (e.g. client devices such as 300 in Figure 1) of the signatory users having appropriate roles.

As an example, using only the illustrated values of the data structure 500 (where for simplicity document A' is of document type A, document B' of document type B, etc. and users denoted U1 - U4 respectively has roles R1 - R4), the execution plan 505 will control a server or another device to send one or more documents D' (of document type D) to one or more recipient signatory users U4 (having or being associated with role R4), to send one or more documents A' (of document type A) to one or more recipient signatory users U3 (with role R3) and to one or more recipient signatory users U1 (with role R1), and to send one or more documents C' (of document type C) to the one or more recipient signatory users U1, all as part of a first execution step or first batch of transmission.

Furthermore, as part of a second execution step or second transmission batch, the execution plan 505 will control a server or another device to send one or more documents C' to one or more recipient signatory users U3, and to send one or more documents B' to one or more recipient signatory users U2.

Finally, as part of a third execution step or third transmission batch, the execution plan 505 will control a server or another device to send one or more documents A' to one or more recipient signatory users U4

Accordingly, the data structure 500 controls a server or another device to transmit electronic documents for electronic signature in a hybrid serial/parallel way (as schematically indicated by 506) rather than a strictly serial way. At each step or batch of sending a number of documents, relevant documents are sent to as many recipients as possible or preferred in parallel while still adhering to ordering restrictions (e.g. signatory user(s) 'XX' should sign before signatory user(s) 'YY'). In other words, the steps/batches are done in serial while transmission and signing is done in parallel within each step/batch. This improves the workflow in relation to properly obtaining electronic signature from relevant users and effectively reduces the overall time in obtaining the signatures or at least greatly increases the likelihood of reduced time thereof, in particular compared to a strictly serial way of obtaining electronic signatures.

In some embodiments, control or validation is included between each step (or at least some of them) checking that the signatures of the previous step is correctly signed (i.e. checking the correct persons/users, e.g. also with the correct roles, have duly electronically signed the correct documents). In some such embodiments, if the control or validation check is not fully satisfactorily then the operation may be halted or actions of the previous step (or at least the ones that did not pass the validity check) may be repeated e.g. in corrected form. This ensures avoiding wasted work (or at least reduces the risk thereof) e.g. if subsequent signatory users applies signatures that is invalid or needs to be re-done.

The control or validation may correspond to the validation as described in connection with Figures 3 and 4.

It is noted, that the second aspect and the first aspect works well in combination although they can also function separately.

The functionality according to Figure 5 may e.g. be implemented by the flow chart of Figure 6.

Figure 6 schematically illustrates a flow chart of hybrid serial/parallel execution of obtaining electronic signatures.

Shown in Figure 6 is a flow chart of an embodiment of a computer-implemented method 600 of hybrid serial/parallel execution of obtaining electronic signatures where the computer-implemented method e.g. is performed by an electronic data processing device or system, e.g. such as the one illustrated in Figure 7.

At step 601, the method starts and potentially is initialized, etc. This e.g. includes determining a plurality of electronic documents to be signed by at least one signatory user during this execution of the method 600.

At step 602, respective document types is determined on the basis of the plurality of electronic documents to be signed or otherwise provided. The document types may (and preferably do) correspond to the document types described in relation to Figure 5 (see e.g. DT/502 in Figure 5).

At step 603, roles of the recipient users and a document (transmission and signing) ordering, given the particular plurality of electronic documents to be signed, is determined or otherwise provided. The roles may (and preferably do) correspond to the roles as described in relation to Figure 5 (see e.g. R/501 in Figure 5).

In at least some embodiments, an execution data structure is used to determine the relevant roles and the document ordering for the particular plurality of electronic documents to be signed. A role is associated with at least one specific signatory user but two or more signatory users may be associated with a same role. The roles are significant in optimally determining the ordering of the transmission and signing of the documents.The execution data structure may and preferably correspond to a data structure as explained in connection with Figure 5 (see e.g. 500 in Figure 5). In some such embodiments, one or more roles and a document ordering for a particular determined document type is simply obtained, e.g. using lookup or other, in the data structure using the document type as input. As an example given the exemplary illustrated numbers of Figure 5, if the document type is C then role R1 with a first step value or indication (as given by '1' in the table) and role R3 with a second step value or indication (as given by '2' in the table) are determined. This signify (and is controlled to that effect) that the one or more documents (of the particular plurality of electronic documents to be signed) being of document type C is sent first (e.g. as a first step/batch) to the recipient signatory user(s) having role R1 and second/subsequently (e.g. as a second step/batch) to the recipient signatory user(s) having role R3. Such a determination is done for each determined document type of the particular plurality of electronic documents to be signed in effect providing an execution plan or execution schedule for transmission.

Alternatively, other suitable ways of determining relevant roles and/or determining a document (transmission and signing) ordering may be used. They may e.g. still be determined together or alternatively separately.

At step 604, the one or more recipient signatory users associated with the determined roles are identified or determined, e.g. using stored additional data defining such relationships. For example, if a documents to be signed is an annual report for company Z that should be signed firstly by the CEO of the company and the board of directors and then subsequently by the external accountant for the company, then a role may be CEO, a role may be board member, and a role may be accountant (or identifiers or values representing such) and the additional data could specify that (as examples) person X is CEO of company Z, person X is (also) a board member of company Z, person Y is a board member of company Z, person ZZ is a board member of company Z, and person AA is accountant for company Z.

A data structure could e.g. comprise an entry for number of companies, associations, legal entities, or other, and for each entry have records of every applicable role for that entry and for each role list or identify every person (e.g. by name or other identifier and e.g. contact details such as e-mail address) fulfilling that role.

As an alternative, the execution data structure may have recipient signatory user ids or recipient signatory user contact info (such as an e-mail address) instead of or in supplement to roles (e.g. where a user id for a person fulfilling a role is put in place of an identifier of the role) but this would generally require a separate execution data structure for each company, association, legal entity, or other, which is less optimal with respect to storage requirements.

After at least contact details (e.g. an e-mail address) has been established in a suitable way for each recipient signatory user then a first set of the plurality of electronic documents to be signed is transmitted or otherwise provided at step 605 to a first set of one or more relevant recipient signatory users (or their respective user device). Most often, each first set will be a first sub-set of the plurality of electronic documents (containing one or more documents) and a first sub-set (containing one or more recipient signatory users) of the relevant recipient signatory users. However, in certain situations it could e.g. be that all the documents (one or more) are sent or otherwise provided at each step but to different recipient signatory users. It could also be that a new document is sent or otherwise provided at each step to a same single recipient signatory user. A first sub-set of documents may herein also be referred to as a first batch of documents (to be signed).

The first set/sub-set of documents (herein equally referred to only as first sub-set of documents) to be sent or provided as a first step/batch is given by documents (of the particular plurality of electronic documents to be signed) that according to the execution data structure has a document type having a first step value or indication (e.g. a '1' in the table). The first set/sub-set of recipient signatory users (herein equally referred to only as first sub-set of recipient signatory users) to receive or obtain the first sub-set of documents are given by the roles (and additional data linking the roles to specific persons/users) that according to the execution data structure is linked to respective document types of the documents of the first sub-set of documents.

In some embodiments, the first sub-set of documents are simply sent to the recipient signatory users, e.g. by e-mail or provided via connection or login to a server or the like. In other embodiments, the first sub-set of documents is sent according to an embodiment of the first aspect as disclosed herein, i.e. transmitting or otherwise providing one or more combined representative or unique values (see e.g. 110/Hₐₗₗ in Figure 1) as disclosed herein, e.g. in connection with Figures 1 and/or 2.

After receipt/provision and e.g. presentation of the first sub-set of the documents, the recipient signatory users individually electronically sign (if they choose to) the documents in question, as generally is known or as disclosed herein.

At step 606, the signed versions of the first sub-set of documents is obtained or received, e.g. by a server or other suitable device (see e.g. Figure 7). It is noted that the signed versions practically speaking probably will not be received at the same time, in particular if involving different signatory users. In some alternative embodiments, only a notification or similar (specifying that a document has been signed) is received or provided rather than receiving a full version of the signed document.

In some embodiments, the signed documents of the first sub-set is received according to an embodiment of the first aspect as disclosed herein, i.e. receiving one or more signed combined representative or unique values (see e.g. 115 in Figure 3) as disclosed herein, e.g. in connection with Figures 3 and/or 4.

After receiving signed versions of the first sub-set of documents (or a notification thereof) step 607 checks the validity of the signatures (e.g. together with additional checks). The check of validity will depend on the way signatures are used and applied. In some embodiments, the validity check of signatures is done according to the first aspect as disclosed herein, e.g. as explained in connection with Figures 3 and 4.

If the validity check of the signatures is not ok, the method 600 proceeds to step 608 where documents for signature is re-transmitted to the relevant signatory user(s). Furthermore, one or more correctional actions (e.g. correcting a role, an e-mail, or other) may optionally be carried out as part of step 608 or another suitable step before re-transmitting. Alternatively, step 607 proceeds - in case of no - to step 611 where the method ends (and potential corrections and/or re-transmissions may be handled in another suitable way). In the illustrated example of Figure 5, Step 607 may be executed at the 'Ctrl/valid.' dashed lines.

If the check(s) of step 607 is yes, the method 600 proceeds to step 609 where it is checked whether all documents of the plurality of electronic documents to be signed has duly been processed (signed) or not, i.e. it is tested whether further unsent documents still needs to be signed. If yes (i.e. there still are un-signed/un-processed documents of the plurality of electronic documents to be signed), the method 600 loops back to step 605 and a next set of the plurality of electronic documents to be signed is transmitted at step 605 to a next set of one or more relevant recipient signatory users. If no (signifying that all of the plurality of electronic documents to be signed has validly been signed), the method 600 proceeds to step 610 where it is tested whether the method should be repeated or not for another plurality of electronic documents to be signed in a similar way. If yes, the method loops back to step 602 where respective document types of another plurality of electronic documents to be signed is determined and the process is repeated. If no, the method 600 proceeds to step 611 ending method 600.

In the illustrated example of Figure 5, iterations of steps 605, 606, 607, potentially 608, and 609 may be carried whereby documents A', D', C' are a first set/batch of the plurality of electronic documents to be signed and users U1, U3, U4 (having roles R1, R3, R4) is a first set of relevant recipient signatory users; documents B', C' is a second set/batch of the plurality of electronic documents to be signed and users U2, U3 (having roles R2, R3) is a second set of relevant recipient signatory users; document A' is a third set/batch of the plurality of electronic documents to be signed and user(s) U4 (having role R4) is a third set of relevant recipient signatory users; and so on.

It is noted, that the method 600 could also be user assisted or at least partly user assisted, e.g. with one or more manual or partly manual steps. For example, the method 600 or a system or device executing the method 600 could e.g. prompt a user to input the name and an e-mail of a CEO in question, choose a corrective action, etc.

It is further noted, that instead of identifying or determining all the relevant one or more recipient signatory users associated with the determined roles for all relevant documents (as done in step 604), only the recipient signatory user(s) associated with the determined roles for documents of the relevant sub-set could be determined (where step 609 in case of yes then should loop back to step 604).

The method of Figure 6 and embodiments thereof may be used as a part of or together with one or more other methods as disclosed herein.

Figure 7 schematically illustrates a block diagram of embodiments of an electronic data processing device or system implementing various embodiments of the method(s) disclosed herein.

Shown is a representation of an electronic data processing system or device 700 comprising one or more processing units 702 connected via one or more communications and/or data buses 701 to an electronic memory and/or electronic storage 703, one or more signal transmitter and receiver communications elements 704 (e.g. one or more selected from the group comprising cellular, Bluetooth, WiFi, etc. communications elements) for communicating via a computer network, the Internet, and/or the like 709, an optional display 708, and one or more optional (e.g. graphical and/or physical) user interface elements 707.

The electronic data processing device or system 700 can e.g. be a suitably programmed computational device, e.g. like a PC, laptop, computer, server, smart-phone, tablet, etc. and is specifically programmed to carry out or execute the computer-implemented method(s) and embodiments thereof as disclosed herein and variations thereof. The electronic data processing device or system 700 may respectively represent a client and a server as described herein.

Some preferred embodiments have been shown in the foregoing, but it should be stressed that the invention is not limited to these, but may be embodied in other ways as falling within the subject matter as defined in the accompanying claims.

In the claims when enumerating several features, some or all of these features may be embodied by one and the same element, component, item or the like. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, elements, steps or components but does not preclude the presence or addition of one or more other features, elements, steps, components, or groups thereof.

## Claims

1. A computer-implemented method of providing one or more electronic signatures for a plurality of electronic documents (101), the method comprising the steps of:
- obtaining or deriving a representative or unique value (105), e.g. a hash value, for each of the plurality of electronic documents (101) determined or indicated to having to be electronically signed by a signatory user,
- deriving a combined representative or unique value (110), e.g. a combined hash value, on the basis of representative or unique values obtained or derived for the plurality of electronic documents (101),
- transmitting or providing access to the plurality of electronic documents (101) to or for a client device (300) being accessible to the signatory user,
- displaying, by the client device (300), the plurality of electronic documents (101) or a representation thereof to the signatory user, and
- electronically signing the combined representative or unique value (110) by an electronic signature of the signatory user, resulting in an electronically signed combined representative or unique value (115), in response to electronically registering that the signatory user has accepted to sign each of the plurality of electronic documents (101) determined or indicated to having to be electronically signed.

2. The computer-implemented method according to claim 1, wherein the method further comprises
- transmitting or providing access to the electronically signed combined representative or unique value (115) to or for a server (100), and
- validating, at the server (100), the electronic signature of the signatory user.

3. The computer-implemented method according to claim 2, wherein
- the step of electronically signing the combined representative or unique value (110) comprises
∘ encrypting the combined representative or unique value (110), e.g. using a private cryptographic key associated with the signatory user, and
- the step of validating the electronic signature of the signatory user comprises decrypting the electronically signed combined representative or unique value (115), e.g. using a public cryptographic key associated with the signatory user, and comparing the resultant value (110') with a stored original, re-generated, or generated combined representative or unique value (110") and in case of a match designating successful validation.

4. The computer-implemented method according to any one of claims 1 - 3, wherein the method further comprises a step of transmitting or providing access to the combined representative or unique value (110) to or for the client device (300), and e.g. storing the combined representative or unique value (110) as a stored original combined representative or unique value (110").

5. The computer-implemented method according to any one of claims 1 - 4, wherein the plurality of electronic documents (101) is determined or indicated to having to be electronically signed by both a first signatory user and a second signatory user and the method comprises:
- transmitting or providing access to the combined representative or unique value (110) to or for a first client device (300) being accessible to the first signatory user and to or for a second client device (300) being accessible to the second signatory user,
- displaying the plurality of electronic documents (101) to the first and the second signatory user, respectively by the first and the second client device (300),
- electronically signing the combined representative or unique value (110) by a first electronic signature of the first signatory user, resulting in a first electronically signed combined representative or unique value (115), in response to electronically registering that the first signatory user has accepted to sign each of the plurality of electronic documents (101), and
- electronically signing the combined representative or unique value (110) by a second electronic signature of the second signatory user, resulting in a second electronically signed combined representative or unique value (115), in response to electronically registering that the second signatory user has accepted to sign each of the plurality of electronic documents (101).

6. The computer-implemented method according to any one of claims 1 - 5, wherein the representative or unique value (105) is a hash value derived by applying a hash function to one or more data structures comprising or representing one of the plurality of electronic documents (101).

7. The computer-implemented method according to any one of claims 1 - 6, wherein the combined representative or unique value (110) is a hash value derived by applying a hash function to one or more data structure comprising or representing the representative or unique values (105) for the plurality of electronic documents (101).

8. The computer-implemented method according to any one of claims 1 - 7, wherein
- each of the plurality of electronic documents (101) is associated with a predetermined document type selected from a group of predetermined document types,
- each of the plurality of signatory users has been designated as having a predetermined role selected from a group of predetermined roles,
- an execution data structure (500) comprises
∘ a number of document type data items (502), each representing one document type from the group of predetermined document types,
∘ a number of role data items (501), each representing a role from the group of predetermined roles,
∘ data linking each document type data item (502) to at least one role data item (501), each link between a document type data item (502) and a role data item (501) constituting or forming a document type and role data pair,
∘ execution data for at least some document type and role data pairs, the execution data for a particular document type and role data pair representing an execution sequence or order value of the particular document type and role data pair, and
wherein the method comprises generating data representing an execution plan (505) by:
- determining a document type data item (502) for each of the plurality of electronic documents (101),
- for each determined document type data item (502) determining a number of its document type and role data pairs using the execution data structure (500),
- for each determined document type and role data pair, determining its execution sequence or order value and its role data item (501),
- determining, for each role data item (501) of the determined document type and role data pair(s), at least one receiving signatory user, of the plurality of signatory users, being associated with the particular role data item (501), and
- generating the data representing an execution plan (505) by ordering the plurality of electronic documents (101) according their respective execution sequence or order values.

9. The computer-implemented method according to claim 8, wherein the method further comprises dividing the electronic documents of the plurality of electronic documents (101) into respective document sets according to what execution sequence or order value an electronic document is associated with according to the execution data structure (500), so that each document set comprises only electronic documents having the same execution sequence or order value.

10. The computer-implemented method according to claim 9, wherein the method comprises transmitting or providing access to the combined representative or unique value (110) and/or the electronic documents only of a particular document set as a respective batch where batches of respective document sets are transmitted in an ordering as set or controlled by its execution sequence or order value.

11. The computer-implemented method according to claim 10, wherein validation of electronic signing of documents of one batch of a document set needs to be successful before initiating transmission or provision of a next batch of a combined representative or unique value (110) and/or electronic documents of a next document set.

12. A computer-implemented method of providing a plurality of electronic documents (101) for electronic signature to a number of client devices (300) respectively accessible by a plurality of signatory users, wherein the plurality of electronic documents (101) is determined or indicated to having to be electronically signed by a plurality of signatory users and wherein
- each of the plurality of electronic documents (101) is associated with a predetermined document type selected from a group of predetermined document types,
- each of the plurality of signatory users has been designated as having a predetermined role selected from a group of predetermined roles,
- an execution data structure (500) comprises
∘ a number of document type data items (502), each representing one document type from the group of predetermined document types,
∘ a number of role data items (501), each representing a role from the group of predetermined roles,
∘ data linking each document type data item (502) to at least one role data item (501), each link between a document type data item (502) and a role data item (501) constituting or forming a document type and role data pair, and
∘ execution data for at least some document type and role data pairs, the execution data for a particular document type and role data pair representing an execution sequence or order value of the particular document type and role data pair, and
wherein the method comprises generating data representing an execution plan (505) by:
- determining a document type data item (502) for each of the plurality of electronic documents (101),
- for each determined document type data item (502) determining a number of document type and role data pairs using the execution data structure (500),
- for each determined document type and role data pair, determining its execution sequence or order value and role data item (501), and
- determining, for each role data item (501) of the determined document type and role data pair(s), at least one receiving signatory user, of the plurality of signatory users, being associated with the particular role data item (501), and wherein the method further comprises
- transmitting or providing access to the plurality electronic documents (101) in an ordering as set or controlled by the respective execution sequence or order value of the plurality electronic documents (101).

13. The computer-implemented method according to claim 12, wherein the method further comprises dividing the electronic documents of the plurality of electronic documents (101) into respective document sets according to what execution sequence or order value an electronic document is associated with according to the execution data structure (500), so that each document set comprises only electronic documents having the same execution sequence or order value.

14. The computer-implemented method according to claim 13, wherein the method comprises transmitting or providing access to the electronic documents, and/or e.g. a combined representative or unique value (110), only of a particular document set as a respective batch where batches of respective document sets are transmitted in an ordering as set or controlled by its execution sequence or order value, e.g. where the combined representative or unique value (110), e.g. a combined hash value, is derived on the basis of a representative or unique value obtained or derived for each the plurality of electronic documents (101), and where the respective representative or unique value for a particular electronic document (101) of the plurality of electronic documents (101) is derived on the basis of the particular electronic document (101).

15. An electronic signature computer system or device (100, 300, 700) wherein the computer system or device (100, 300, 700) is adapted to execute the method according to any one of claims 1 - 11 and/or the method according to any one of claims 12 - 14.

16. A non-transient computer-readable medium, having stored thereon, instructions that when executed by a computer system or device cause the computer system or device to perform the method according to any one of claims 1 - 11 and/or the method according to any one of claims 12 - 14.
